# EUROPÄISCHE PATENTSCHRIFT

(11) **EP 1 076 783 B1**
(45) Veröffentlichungstag und Bekanntmachung des Hinweises auf die Patenterteilung: **30.06.2004**
(21) Anmeldenummer: 00914074.0
(22) Anmeldetag: 08.02.2000
(51) Int. Cl.: F16F 9/54, B60G 15/00, B60G 13/00, B60G 3/20

(54) **LAGERUNG FÜR EIN DÄMPFERBEIN ODER EINE LUFTFEDER EINER RADAUFHÄNGUNG**
BEARING FOR A SHOCK ABSORBER STRUT OR A PNEUMATIC SPRING
FIXATION POUR UN MONTANT DE SUSPENSION OU UN AMORTISSEUR PNEUMATIQUE D'UNE SUSPENSION DE ROUE

(30) Priorität: 06.03.1999 DE 19909947; 15.12.1999 DE 19960457
(43) Veröffentlichungstag der Anmeldung: 21.02.2001
(73) Patentinhaber: Dr. Ing. H.C.F. Porsche Aktiengesellschaft, 70435 Stuttgart (DE)
(72) Erfinder: SCHAIBLE, Walter, D-71282 Hemmingen (DE)
(86) Internationale Anmeldenummer: PCT/EP2000/001001
(87) Internationale Veröffentlichungsnummer: WO 2000/053951

(56) Entgegenhaltungen:
- DE-A- 3 233 878
- DE-A- 4 436 599
- DE-A- 19 625 106
- US-A- 2 823 927
- US-A- 2 888 269
- US-A- 2 935 334
- US-A- 4 332 397
- US-A- 5 560 638

## Beschreibung

Die Erfindung bezieht sich auf eine Radaufhängung mit einem Dämpferbein oder einer Luftfeder.

Aus der DE 39 02 407 C1 ist eine Lagerung für einen Stoßdämpfer einer Radaufhängung am Fahrzeugaufbau eines Kraftfahrzeugs bekannt, die Lagerbolzen umfaßt, welcher an einer Befestigungsplatte gehalten sind. Gleichzeitig ist mit dem oberen freien Ende des Stoßdämpfers auch ein Radführungsglied auf den Lagerbolzen schwenkbeweglich gehalten. Des Weiteren ist aus der DE 196 25 106 A1 ein Schwingungsdämpfer bzw. ein Federbein bekannt, wobei der Schwingungsdämpfer oder das Federbein einerseits am Fahrzeugaufbau und andererseits an einem Radführungsteil mittels elastischer Lager befestigt ist. Das obere freie Ende einer Kolbenstange des Schwingungsdämpfers bzw. des Federbeines ist mit einem Lagerelement verbunden, das radial nach außen stehende elastische Lagerungen zum Festlegen an einem Fahrzeugbauteil aufweist.

Aufgabe der Erfindung ist es, eine Lagerung für ein schräg angestelltes Dämpferbein oder eine Luftfeder zu schaffen, die bei Ein- und Ausfederungsbewegungen des Rades eine optimale Federungscharakteristik gewährleistet und die zudem in einfacher Weise mit dem Fahrzeugaufbau verbindbar ist.

Diese Aufgabe wird erfindungsgemäß durch die Merkmale der Ansprüche 1, 7 und 9 gelöst. Weitere vorteilhafte Merkmale beinhalten die Unteransprüche.

Die mit der Erfindung hauptsächlich erzielten Vorteile bestehen darin, daß ein unter einem Winkel in Querrichtung des Fahrzeugs schräg angestelltes Dämpferbein oder eine Luftfeder bei Ein- und Ausfederungsbewegungen des Rades frei verschwenkbar bzw. kardanisch bewegbar ist. Hierzu ist das Dämpferbein mit seinem freien oberen Ende unter Zwischenschaltung eines Abstützelements in einer Lagerschale gehalten. Diese umfaßt zwei auf einer Schwenkachse gegenüberliegend angeordneten Lagerbolzen, welche in einem fahrzeugfesten Träger kardanisch und/oder schwenkbeweglich abgestützt werden.

Die Baueinheit Lagerschale, Abstützelement und Stoßdämpfer bildet eine Vormontageeinheit und ist in einfacher Weise mit einem am Fahrzeugaufbau befestigten Querträger des Fahrzeugs verbindbar. Die Spiralfeder des Dämpferbeins ist im Abstützelement mit mindestens einer letzten Windung in einer Ringnut fixiert gehalten.

Die Befestigung des Abstützelements in der Lagerschale erfolgt zwischen planen korrespondierenden Verbindungsflächen des Abstützelements und der Lagerschale. Eine Festlegung erfolgt über Schraubmittel, Nieten, eine Klebung oder dergleichen Verbindung.

Die Lagerschale weist eine zentrisch angeordnete topfförmige Vertiefung auf, in welche ein Stützlager des Dämpferbeines hineinragt oder in diesem angeordnet ist.

Die Lagerbolzen der Lagerschale sind nach einer ersten Ausführung jeweils in elastischen Elementen gehalten, welche mittels einer Lagerschelle an einen Querträger des Fahrzeugs festsetzbar sind. Hierzu kann der Querträger halbkreisförmige Ausnehmungen aufweisen, wobei das Gegenstück eine halbkreisförmig gebogene Schelle ist.

Die Lagerschale wird über die Lagerbolzen, welche jeweils von einer Schelle umfaßt sind, mit einem Querträger des Fahrzeugaufbaus verbunden. Dieser Querträger ist oberhalb und losgelöst von einem, die Radaufhängung aufnehmenden Fahrschemel, angeordnet.

Nach einer weiteren Ausführung weist die Lagerschale Aufnahmebohrungen für Lagerhülsen auf, die gegenüberliegend angeordnet sind und eine gemeinsame Schwenkachse bilden, welche von einem elastischen Hülsenelement umgeben sind, und mittels einer Schraube am Querträger befestigt werden. Diese Ausführung hat den wesentlichen Vorteil einer einfachen Montage und Demontage, da die horizontal gelagerten Schraubenbolzen mit einem Werkzeug günstig zu erreichen sind.

Statt eines Dämpferbeines kann in der Lagerschale auch eine Luftfeder gehalten sein, die bei Entfall des Abstützelements direkt mit einer zylindrischen Hülse an der planen Verbindungsfläche der Lagerschale abgestützt und befestigt ist. Diese Verbindungsfläche ist als durchgehende Ringfläche ausgeführt.

Ausführungsbeispiele der Erfindung sind in den Zeichnungen dargestellt und werden im folgenden näher beschrieben.

Es zeigen
- Fig. 1: eine schaubildliche Darstellung eines schräg angestellten und in einem Querträger gelagerten Dämpferbeines mit darunter angeordnetem losgelösten Fahrschemel,
- Fig. 2: einen Schnitt durch eine Lagerschale mit Abstützelement und das in dieser Lagerschale gehaltene Dämpferbein,
- Fig. 3: die Lagerschale mit gehaltener Luftfeder im Schnitt,

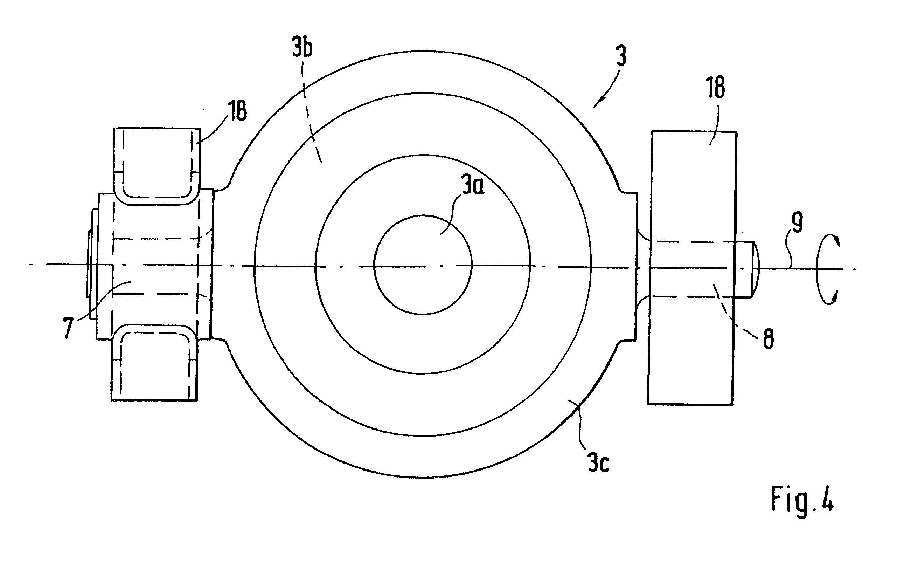

- Fig. 4: eine Draufsicht auf die Lagerschale,

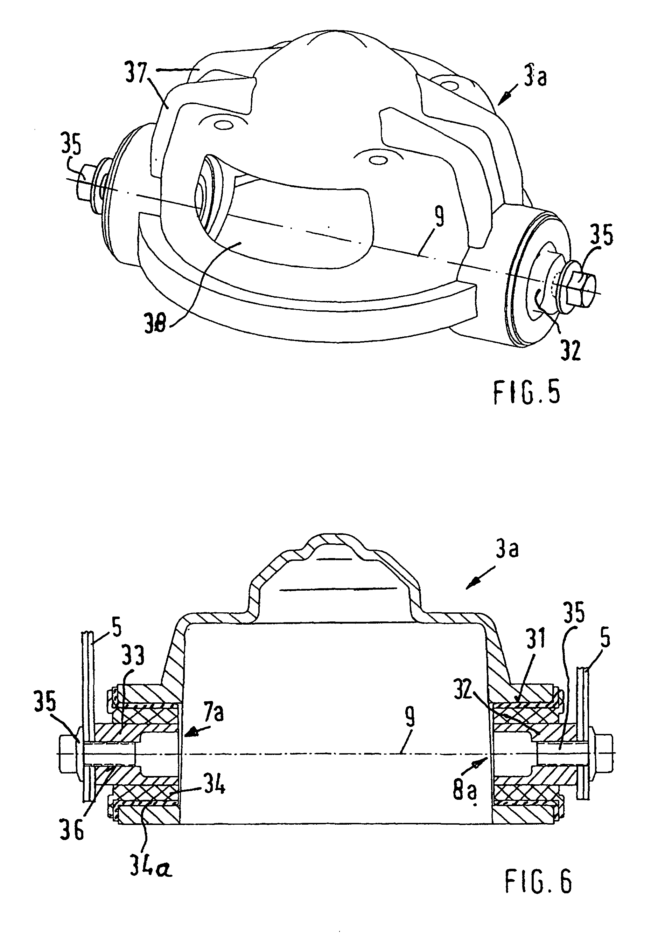

- Fig. 5: eine schaubildliche Darstellung der Lagerschale mit eingesetzten Lagerbolzen,
- Fig. 6: einen Schnitt durch die Lagerschale mit eingesetzten Lagerbolzen sowie einem elastischen Hülsenelement und einer Lagerhülse.

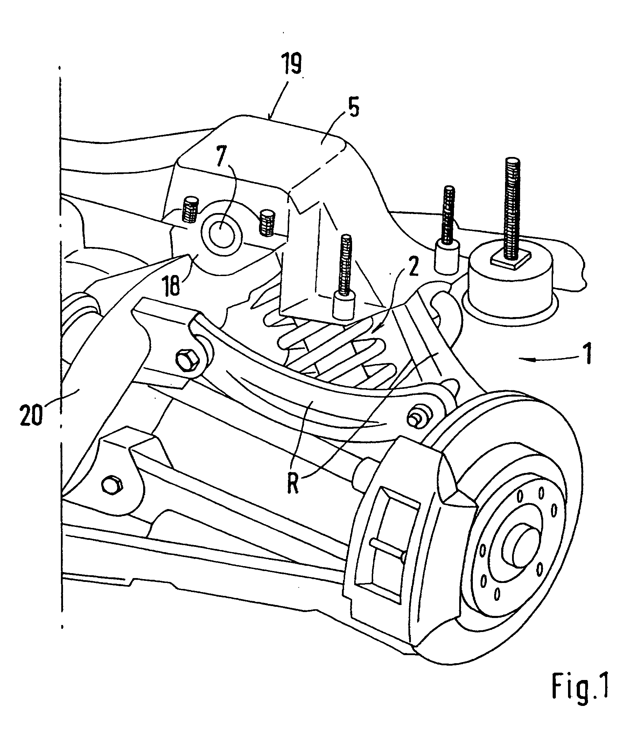

Wie in Fig. 1 in einer schaubildlichen Darstellung teilweise gezeigt, weist eine Hinterradaufhängung 1 ein unter einem Winkel schräg angestelltes und in Querrichtung des Fahrzeugs ausgerichtetes Dämpferbein 2 oder eine Luftfeder L auf. Das Dämpferbein 2 ist mit seinem unteren Ende in einem Radträger und mit seinem oberen freien Ende 6 mittels einer Lagerschale 3 und einem Abstützelement 4 in einem Querträger 5 abgestützt.

Die Lagerschale 3 ist vorzugsweise topfartig ausgestaltet und weist am unteren Randbereich sich radial in Fahrzeuglängsrichtung wegerstreckende Lagerbolzen 7, 8 auf. Diese sind auf einer gemeinsamen Schwenkachse 9 und gegenüberstehend angeordnet.

Die Lagerschale 3 besteht vorzugsweise aus einem Gußteil und ist mit einem zentrischen Topf 3a versehen, an dem sich eine plane Verbindungsfläche 3b anschließt. An diese Verbindungsfläche, die als Ringfläche ausgeführt ist, ist eine zylindrische Wandung 3c angeformt, welche die beiden Lagerbolzen 7, 8 aufweist.

Innerhalb der Lagerschale 3 ist das Abstützelement 4 angeordnet, welches rondenförmig ausgebildet ist und eine nutförmige Ringaufnahme 10 zur Lagerung mindestens einer endseitigen Windung einer Spiralfeder 11 aufweist. Die Verbindung mit der Lagerschale 3 erfolgt über die Verbindungsfläche 3b, die korrespondierend mit einer weiteren Verbindungsfläche 4a des Abstützelements 4 angeordnet ist. Die Befestigung an der Lagerschale 3 kann mittels Schraubmittel, Niete, oder eine Klebung oder dergleichen Mittel erfolgen.

Die Lagerbolzen 7, 8 sind in elastischen Elementen 12 gehalten, welche eine Schwenkbewegung in beide gezeigten Pfeilrichtungen 14, 15 zulassen. Die elastischen Lager 12 können Zwischenlagen aus Metall aufweisen. Damit eine optimale Verschwenkbarkeit möglich wird, könnte nach einer weiteren erfindungsgemäßen Ausführung die Lagerbolzen 7, 8 auch in Gleitbuchsen angeordnet sein.

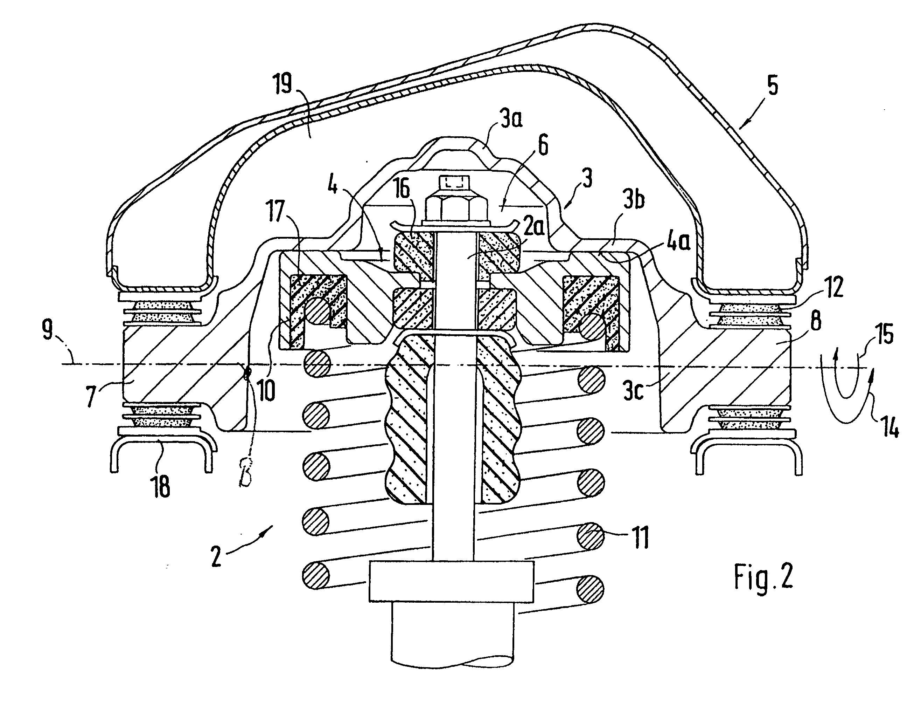

Wie in Fig. 2 näher dargestellt, ist das freie obere Ende 6 der Kolbenstange 2a des Dämpferbeines 2 in einem elastischen Stützlager 16 gehalten, das im Abstützelement 4 eingeklemmt wird. Die Spiralfeder 11 ist ebenfalls in einem elastischen Stützlager 17 gehalten.

Die Lagerschale 3 wird über sogenannte Schellen 18 am Querträger 5 befestigt, der zur Aufnahme der Lagerschale 3 eine Ausbuchtung 19 aufweist.

Der Querträger 5 ist vorzugsweise zweischalig ausgeführt und oberhalb eines Fahrschemels 20 angeordnet und losgelöst von diesem vorgesehen und nur mit dem Fahrzeugaufbau über Schraubmittel verbunden oder im Fahrzeugaufbau verschweißt. Das Dämpferbein 2 erstreckt sich quer zwischen Radführungslenkern R einer oberen Führungsebene in Richtung Fahrzeuglängsmittenachse.

Nach einer weiteren Ausführung der Erfindung ist die Lagerschale 3a am unteren Randbereich mit radialen Aufnahmebohrungen 31 für Lagerbolzen 7a und 8a versehen, welche Lagerhülsen 32, 33 umfassen, die von einem elastischen Element 34 umgeben sind, das von einer Außenschale 34 a umgeben ist. Das elastische Element 34, die Lagerhülse 32, 33 sowie die Außenschale 34 a bilden ein Bauelement. Dieses wird in die Bohrung 31 eingepreßt gehalten. Die Bewegungen erfolgen im elastischen Element 34. Zur Befestigung der Lagerschale 3a am Querträger 5 dienen Schrauben 35, welche in eine Gewindebohrung 36 der Lagerhülsen 32, 33 einschraubbar sind. Die Lagerbolzen 7a, 8a bilden die gemeinsame Schwenkachse 9 für die Lagerschale 3a.

Die Lagerschale 3a weist an der Oberseite zu beiden Seiten Rippen 37 auf, die eine Verstärkung der Schale bewirken. Des Weiteren können auch Öffnungen 38 in der Lagerschale 3a vorgesehen sein, die hauptsächlich zur Gewichtserleichterung dienen.

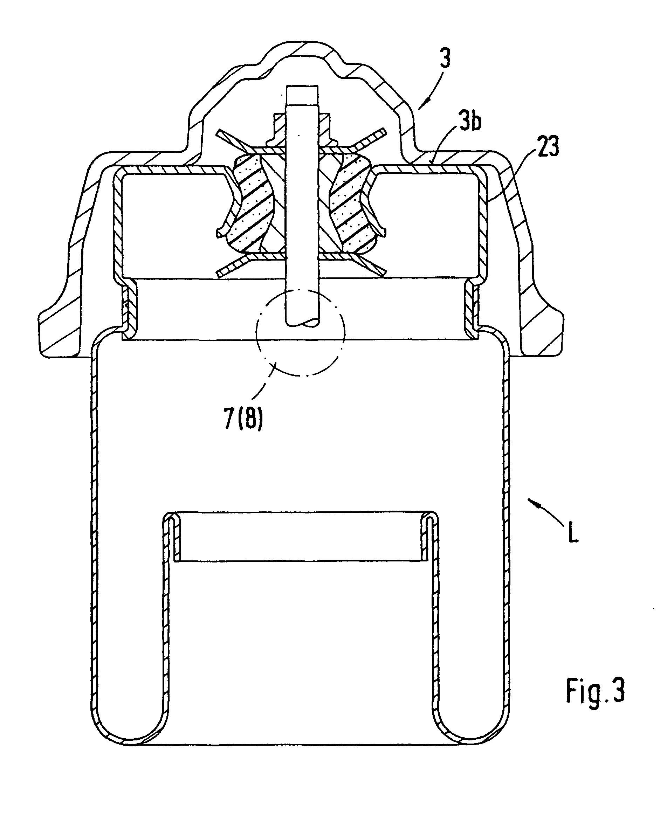

Statt eines Dämpferbeines 2 kann auch eine Luftfeder L gemäß Fig. 3 in der Lagerschale 3 gehalten werden. In diesem Fall entfällt das Abstützelement 4 und die Luftfeder stützt sich mit ihrer zylindrischen Kappe 23 direkt an der Verbindungsfläche 3b der Lagerschale 3 ab.

## Patentansprüche

1. Radaufhängung am Fahrzeugaufbau eines Kraftfahrzeugs mit einem Dämpferbein, das mittels Lagerungen, die in einem Lagerelement gegenüberliegend angeordnet sind abgestützt ist, wobei das Dämpferbein (2) schräggestellt ist und sich im Lagerelement abstützt, ein als Lagerschale (3; 3a) ausgebildetes Lagerelement für das schräggestellte Dämpferbein (2) in einem mit dem Fahrzeugaufbau verbundenem Querträger (19) angeordnet und über zwei auf einer gemeinsamen Schwenkachse (9) liegenden Lagerbolzen (7, 8; 7a, 8a) kardanisch und/oder schwenkbeweglich abgestützt ist und wobei die Lagerschale (3; 3a) losgelöst von einem die Radaufhängung schwenkbeweglich lagernden Fahrschemel (20) angeordnet ist.

2. Radaufhängung nach Anspruch 1, **dadurch gekennzeichnet, daß** die Lagerbolzen (7, 8) an die Lagerschale (3) angeformt und mit dieser einstückig ausgeführt sind und sich von einem äußeren Randbereich der Lagerschale (3) radial nach außen wegerstrecken und in elastischen Lagern (12) gehalten sind.

3. Radaufhängung nach Anspruch 1, **dadurch gekennzeichnet, daß** die Lagerschale (3a) Aufnahmebohrungen (31) für die Lagerbolzen (7a, 8a) aufweist, welche Lagerhülsen (32, 33) umfassen, die gegenüberliegend angeordnet sind und eine gemeinsame Schwenkachse bilden und die jeweils von einem elastischen Hülsenelement (34) und einer Außenschale (34a) umgeben und mittels einer Schraube (35) am Querträger (5) befestigt sind.

4. Radaufhängung nach den Ansprüchen 1 oder 2, **dadurch gekennzeichnet, daß** die Lagerschale (3) eine zentrisch angeordnete topfförmige Vertiefung mit einer daran anschließenden planen, als Ringfläche ausgebildeten Verbindungsfläche (3b) aufweist, an die sich eine etwa zylinderförmige Wandung (3c) anschließt, an welche die Lagerbolzen (7, 8) angeformt und radial wegragend ausgeführt sind.

5. Radaufhängung nach den Ansprüchen 1, 2 oder 4, **dadurch gekennzeichnet, daß** die Lagerbolzen (7, 8) der Lagerschale (3) jeweils in elastischen Elementen (12) gehalten sind, welche mittels einer Lagerschelle (18) am Querträger (5) des Fahrzeugs festgesetzt sind.

6. Radaufhängung nach den Ansprüchen 2 oder 5, **dadurch gekennzeichnet, daß** die Lagerbolzen (7, 8) in einer Gleitbuchse innerhalb der elastischen Elemente (12) angeordnet und schwenkbeweglich gehalten sind.

7. Radaufhängung am Aufbau eines Kraftfahrzeugs mit einem Dämpferbein, das mittels Lagerbolzen, die in einem Lagerelement gehalten sind, abgestützt ist, wobei das Dämpferbein unter einem Winkel schräg vom Radträger der Radaufhängung zu einer oberen Lagerung geführt ist und sich zwischen oberen Lenkern (R) der Radaufhängung in Richtung Fahrzeuglängsmittenebene erstreckt und wobei eine obere elastische Lagerung (16) des Dämpferbeines (2) ein Abstützelement (4) in einer Lagerschale (3) umfaßt, welche in einer Ausbuchtung (19) des Querträgers (5) über Lagerbolzen (7, 8, 7a, 8a) kardanisch und/oder schwenkbeweglich losgelöst von einem die Radaufhängung schwenkbeweglich lagernden Fahrschemel (20) gehalten ist.

8. Radaufhängung nach den Ansprüchen 2, 5 oder 6, **dadurch gekennzeichnet, daß** der Querträger (5) zweischalig ausgeführt ist und halbkreisförmige Aufnahmen für die elastischen Elemente (12) der Lagerbolzen (7, 8) aufweist, denen die halbkreisförmig ausgeführten Schellen (18) gegenüberstehen.

9. Radaufhängung am Aufbau eines Kraftfahrzeugs mit einer Luftfeder, die mittels Lagerbolzen, die in einem Lagerelement gehalten sind, abgestützt ist, wobei die Luftfeder (L) unter einem Winkel schräg angestellt ist und unmittelbar mit einer Lagerschale (3) verbunden ist und diese auf einer Schwenkachse (9) gegenüberliegend angeordnete Lagerbolzen (7, 8, 7a, 8a) umfaßt, welche in einem fahrzeugfesten Träger (5) losgelöst von einem die Radaufhängung schwenkbeweglich lagernden Fahrschemel (20) kardanisch und/oder schwenkbeweglich abgestützt sind.

## Claims

1. A wheel suspension on the body of a motor vehicle, comprising a shock absorber strut supported by means of bearings arranged opposite one another in a bearing member, wherein the shock absorber strut (2) is inclined and is supported in the bearing member, a bearing member formed as a bearing shell (3; 3a) and provided for the inclined shock absorber strut (2) is arranged in a transverse carrier (19) connected to the vehicle body and is supported cardanically and/or pivotably by two bearing bolts (7, 8; 7a, 8a) lying on a common pivoting axis (9), and wherein the bearing shell (3; 3a) is arranged separately from a subframe (20) pivotably mounting the wheel suspension.

2. A wheel suspension according to claim 1, **characterised in that** the bearing bolts (7, 8) are formed on the bearing shell (3) and are integral therewith and extend radially outwards away from an outer edge region of the bearing shell (3) and are held in resilient mountings (12).

3. A wheel suspension according to claim 1, **characterised in that** the bearing shell (3a) has locating bores (31) for the bearing bolts (7a, 8a), comprising bearing sleeves (32, 33) which are arranged opposite one another and form a common pivoting axis and which are each surrounded by a resilient sleeve member (34) and an outer shell (34a) and are fixed to the transverse carrier (5) by means of a screw (35).

4. A wheel suspension according to claim 1 or 2, **characterised in that** the bearing shell (3) has a centrally arranged, pot-shaped recess with an adjoining, flat connecting surface (3b) formed as an annular surface and adjoined by a substantially cylindrical wall (3c) on which the bearing bolts (7, 8) are formed and from which they extend radially.

5. A wheel suspension according to claim 1, 2 or 4, **characterised in that** the bearing bolts (7, 8) of the bearing shell (3) are each held in resilient members (12) fixed to the transverse carrier (5) of the vehicle by means of a mounting clamp (18).

6. A wheel suspension according to claim 2 or 5, **characterised in that** the bearing bolts (7, 8) are arranged and pivotably held in a slide bushing inside the resilient members (12).

7. A wheel suspension on the body of a motor vehicle, comprising a shock absorber strut supported by means of bearing bolts held in a bearing member, wherein the shock absorber strut is guided at an angle from the wheel carrier of the wheel suspension to an upper bearing and extends between upper control arms (R) of the wheel suspension towards the longitudinal central plane of the vehicle, and wherein an upper resilient bearing (16) of the shock absorber strut (2) comprises a supporting member (4) in a bearing shell (3) which is cardanically and/or pivotably held in a cavity (19) of the transverse carrier (5) by bearing bolts (7, 8, 7a, 8a) separately from a subframe (20) pivotably mounting the wheel suspension.

8. A wheel suspension according to claim 2, 5 or 6, **characterised in that** the transverse carrier (5) is of double-walled construction and has semi-circular mounts for the resilient members (12) of the bearing bolts (7, 8), opposite which the semi-circular clamps (18) are arranged.

9. A wheel suspension on the body of a motor vehicle, comprising a pneumatic spring supported by means of bearing bolts held in a bearing member, wherein the pneumatic spring (L) is positioned at an angle and is directly connected to a bearing shell (3) comprising bearing bolts (7, 8, 7a, 8a) which are arranged opposite one another on a pivoting axis (9) and are cardanically and/or pivotably supported in a carrier (5), fixed to the vehicle, separately from a subframe (20) pivotably mounting the wheel suspension.

## Revendications

1. Dispositif (1) pour fixer un élément rapporté (2 ; 3) sur une structure de carrosserie d'un véhicule automobile, au moyen d'éléments de fixation, l'élément rapporté s'étendant le long d'un seuil (9) de la carrosserie du véhicule, les éléments rapportés (2 ; 3) étant reliés de manière interchangeable à un profilé de support (4) de type baguette, par des bords longitudinaux (P1, P2) du profilé, correspondant l'un à l'autre et réalisés concaves et convexes dans leur section transversale des éléments rapportés (2 ; 3) et du profilé de support (4), et le profilé de support (4) étant relié d'une part, par des consoles de fixation (10, 11, 12) disposées espacées sur la carrosserie (8, 9) du véhicule, et d'autre part par des éléments de fixation (5, 6, 7) du profilé de support (4), à la carrosserie (8, 9) du véhicule, **caractérisé en ce qu'**un marchepied (2) ou un habillage de seuil (3), au choix, est relié, au moyen d'une liaison à suspension ou accrochage, entre les bords longitudinaux (P1, P2) du profilé.

2. Dispositif selon la revendication 1, **caractérisé en ce que** le marchepied (2) est constitué d'au moins un profilé creux avec une surface de marche (2a) orientée horizontalement à laquelle se raccorde une paroi intérieure (2b) arrondie et une paroi extérieure (2c) réalisée approximativement rectiligne, et à ces deux parois (2b, 2c) se raccorde, côté extrémité, le bord longitudinal (P1) de section transversale concave du profilé des éléments rapportés (2 ; 3), lequel passe des deux côtés sur le bord longitudinal (P2) de section transversale convexe du profilé de support (4).

3. Dispositif selon les revendications 1 ou 2, **caractérisé en ce que** le bord longitudinal concave (P1) du profilé des éléments rapportés (2 ; 3) comprend un aile (21) coudée située à la partie supérieure qui passe sur un bord profilé (24) du bord longitudinal convexe (P2) du profilé de support (4) en l'accrochant, et une paroi (22) rattachée, située à la partie inférieure, des éléments rapportés (2 ; 3), est arrondie, et s'applique contre une paroi (23) correspondante du bord longitudinal (P2) du profilé de support (4).

4. Dispositif selon les revendications 1, 2 ou 3, **caractérisé en ce que** les éléments rapportés (2 ; 3) avec le profilé de support (4) sont reliés entre eux, entre les bords longitudinaux (P1 et P2) du profilé, par des vis ou rivets.

5. Dispositif selon une ou plusieurs des revendications précédentes, **caractérisé en ce que** le profilé de support (4) est fixé par des vis (S1) à la carrosserie (8, 9) du véhicule par des consoles de fixation (10, 11, 12) reliées par des vis (S2, S3, S4) dans la zone avant, la zone arrière et la zone centrale de la carrosserie (8, 9) du véhicule, et le profilé de support (4) peut être fixé en outre à la carrosserie (8, 9) du véhicule par les éléments de fixation (5, 6, 7).

6. Dispositif selon une ou plusieurs des revendications précédentes, **caractérisé en ce que** les consoles de fixation (10, 11, 12) comportent des surfaces de vissage, orientées dans un plan horizontal, pour le profilé de support (4), les perçages destinés aux vis (S1) étant disposés approximativement dans un plan longitudinal (X-X) vertical médian du profilé de support (4).

7. Dispositif selon une ou plusieurs des revendications précédentes, **caractérisé en ce qu'**au profilé de support (4) est reliée une tôle de liaison (20) dans laquelle est intégrée une console de fixation avant (5).

8. Dispositif selon une ou plusieurs des revendications précédentes, **caractérisé en ce que** des coussins en mousse (40) espacés sont disposés entre les éléments rapportés (2 ; 3) et le seuil (9) ou le longeron (8) de la carrosserie du véhicule.

9. Dispositif selon une ou plusieurs des revendications précédentes, **caractérisé en ce que** les éléments rapportés (2 ; 3) sont fermés à une extrémité libre par un capuchon terminal (26) et un élément d'étanchéité (25) est prévu entre le capuchon terminal 26 et l'extrémité libre des éléments rapportés (2 ; 3).
